# FASCICULE DE BREVET EUROPEEN

(11) **EP 3 362 363 B1**
(45) Date de publication et mention de la délivrance du brevet: **20.03.2019**
(21) Numéro de dépôt: 16793960.2
(22) Date de dépôt: 11.10.2016
(51) Int. Cl.: B64F 5/00

(54) **OUTILLAGE POUR LA MANUTENTION D'UNE NACELLE DE TURBORÉACTEUR D'AÉRONEF**
WERKZEUG ZUR HANDHABUNG EINER LUFTFAHRZEUGTRIEBWERKGONDEL
TOOL FOR HANDLING AN AIRCRAFT ENGINE NACELLE

(30) Priorité: 13.10.2015 FR 1559732
(43) Date de publication de la demande: 22.08.2018
(73) Titulaire: Safran Nacelles, 76700 Gonfreville-l'Orcher (FR)
(72) Inventeur: LECOUTRE, Pascal, 76700 Gonfreville L'orcher (FR); LETARD, Vincent, 76700 Gonfreville L'orcher (FR)
(74) Mandataire: Gaillarde, Frédéric F. Ch.
(86) Numéro de dépôt international: PCT/FR2016/052625
(87) Numéro de publication internationale: WO 2017/064411

(56) Documents cités:
- EP-A1- 1 215 119
- EP-A1- 1 230 124

## Description

L'invention concerne un outillage pour la manutention d'une nacelle de turboréacteur d'aéronef, l'outillage permettant de suspendre la nacelle notamment pour permettre à un opérateur d'intervenir sur cette nacelle.

Un aéronef est propulsé par un ou plusieurs ensembles propulsifs comprenant chacun un turboréacteur qui est logé dans une nacelle.

Une nacelle présente de manière générale une structure sensiblement tubulaire qui entoure le turboréacteur et qui comprend une entrée d'air en amont du moteur, une section médiane destinée à entourer une soufflante dudit turboréacteur et une section aval entourant la chambre de combustion du turboréacteur et qui peut être équipée de moyens d'inversion de poussée.

L'outillage de manutention comprend généralement un portique roulant sur lequel sont fixées une barre de support supérieure, et une barre de support inférieure, ces barres étant destinées à être fixées respectivement sur des ferrures supérieures de la nacelle, et sur des verrous ou étriers inférieurs de la nacelle : un tel outillage est connu par exemple de EP1230124.

Un tel outillage doit pouvoir être utilisé avec différents types de nacelles.

En effet, selon la motorisation associée à la nacelle et selon la présence ou l'absence de certains équipements, comme un inverseur de poussée, les dimensions varient d'une nacelle à l'autre.

Jusqu'à ce jour, ces utilisations différentes nécessitaient un démontage/changement/remontage des barres de support, de manière que les dimensions de ces barres de support puissent correspondre à celles de la nacelle à manutentionner.

Le poids de ces barres de support étant important, typiquement de l'ordre de 30 kg, et les barres supérieures se trouvant en position élevée, leur manipulation était jusqu'alors malaisée et dangereuse.

La présente invention vise notamment à résoudre ces inconvénients et se rapporte pour ce faire à un outillage pour la manutention d'une nacelle de turboréacteur d'aéronef, l'outillage comprenant un portique qui comporte :
- une barre supérieure de support longitudinale adaptée pour être fixée sur des attaches supérieures de la nacelle, et
- une barre inférieure de support longitudinale adaptée pour être fixée sur des attaches inférieures de la nacelle,
caractérisé en ce que la barre supérieure de support est articulée autour d'au moins un premier axe de rotation supérieur au moyen d'une première articulation supérieure, la barre supérieure étant articulée entre au moins une première position de support dans laquelle la barre supérieure présente une première fixation qui est adaptée pour être fixée sur un premier type de nacelle, et au moins une seconde position de support dans laquelle la barre supérieure de support présente une seconde fixation qui est adaptée pour être fixée sur un second type de nacelle.

Cette caractéristique permet à la barre supérieure d'adopter au moins deux positions différentes pour s'adapter au type de nacelle à manutentionner.

Selon une autre caractéristique, la barre supérieure de support est articulée autour d'un second axe de rotation supérieur au moyen d'une seconde articulation supérieure, la barre supérieure de support étant articulée entre au moins une troisième position de support dans laquelle la barre supérieure présente une troisième fixation qui est adaptée pour être fixée sur un troisième type de nacelle, et une quatrième position de support dans laquelle la barre supérieure présente une quatrième fixation qui est adaptée pour être fixée sur un quatrième type de nacelle, et en ce que le second axe de rotation supérieur est perpendiculaire au premier axe de rotation supérieur.

Cette caractéristique permet à la barre supérieure d'adopter au moins deux positions différentes supplémentaires, pour s'adapter au type de nacelle à manutentionner.

De plus, la première articulation supérieure comporte :
- une liaison pivot qui articule la barre supérieure par rapport au portique autour du premier axe de rotation supérieur, le premier axe de rotation s'étendant transversalement et perpendiculairement à la longueur de la barre supérieure, et
- un dispositif d'indexation angulaire qui est conçu pour bloquer le pivotement de la barre supérieure dans sa première position de support et sa seconde position de support sélectivement.

La première articulation supérieure permet un changement de position de la barre supérieure de façon rapide et fiable.

Aussi, la seconde articulation supérieure comporte :
- au moins une liaison pivot qui articule tout ou partie de la barre supérieure par rapport au portique autour du second axe de rotation supérieur, le second axe de rotation s'étendant longitudinalement et suivant la longueur de la barre supérieure, et
- un dispositif d'indexation angulaire qui est conçu pour bloquer le pivotement de la barre supérieure dans sa troisième position de support et sa quatrième position de support sélectivement.

Selon une autre caractéristique, la barre supérieure comporte un tronçon central, un tronçon d'extrémité distal et un tronçon d'extrémité proximal, le tronçon d'extrémité distal et le tronçon d'extrémité proximal étant montés pivotant sur le tronçon central au moyen de la liaison pivot de la seconde articulation supérieure.

Selon un exemple de réalisation, la première fixation qui est adaptée pour être fixée sur un premier type de nacelle et la seconde fixation qui est adaptée pour être fixée sur un second type de nacelle présentent chacune la forme d'une chape en U qui est conçue pour coopérer avec une pièce complémentaire d'une desdites nacelles et une tige de verrouillage associée.

Selon une autre caractéristique, la barre inférieure de support est similaire à la barre supérieure, la barre inférieure est articulée autour d'au moins un premier axe de rotation inférieur au moyen d'une première articulation inférieure, la barre inférieure étant articulée entre au moins une première position de support dans laquelle la barre inférieure présente une première fixation qui est adaptée pour être fixée sur le premier type de nacelle, et au moins une seconde position de support dans laquelle la barre inférieure de support présente une seconde fixation qui est adaptée pour être fixée sur le second type de nacelle.

De même, la barre inférieure de support est articulée autour d'un second axe de rotation inférieur au moyen d'une seconde articulation inférieure, la barre inférieure de support étant articulée entre au moins une troisième position de support dans laquelle la barre inférieure présente une troisième fixation qui est adaptée pour être fixée sur le troisième type de nacelle, et une quatrième position de support dans laquelle la barre inférieure présente une quatrième fixation qui est adaptée pour être fixée sur le quatrième type de nacelle, et en ce que le second axe de rotation inférieur est perpendiculaire au premier axe de rotation inférieur.

Selon un exemple de réalisation préféré, le portique est équipé de moyens de roulement pour favoriser le déplacement du portique.

D'autres caractéristiques et avantages de l'invention apparaîtront à la lecture de la description détaillée qui suit pour la compréhension de laquelle on se reportera aux dessins annexés dans lesquels :
- la figure 1 est une vue d'ensemble en perspective d'un outillage de manutention selon l'invention, qui porte une nacelle ;
- la figure 2 est une vue d'ensemble en perspective d'un outillage de manutention selon l'invention, sans nacelle ;
- la figure 3 est une vue de détail en perspective qui illustre la barre supérieure de support de l'outillage de la figure 1 ;
- la figure 4 est une vue de détail en perspective qui illustre la première articulation supérieure de la barre supérieure de l'outillage ;
- la figure 5 est une vue de détail en perspective qui illustre la deuxième articulation supérieure de la barre supérieure de l'outillage, et une fixation de la barre supérieure qui coopère avec une attache de la nacelle.

Dans la description et les revendications, pour clarifier la description et les revendications, on adoptera à titre non limitatif la terminologie longitudinal, vertical et transversal en référence au trièdre L, V, T indiqué aux figures, dont l'axe L est parallèle à l'axe de la nacelle.

Sur l'ensemble de ces figures, des références identiques ou analogues représentent des organes ou ensembles d'organes identiques ou analogues.

De plus, les termes « supérieur », « inférieur », « horizontal », « vertical » et leurs dérivés font référence à la position ou à l'orientation d'un élément ou d'un composant, cette position ou cette orientation étant considérée lorsque le portique est en configuration de service sur un sol horizontal.

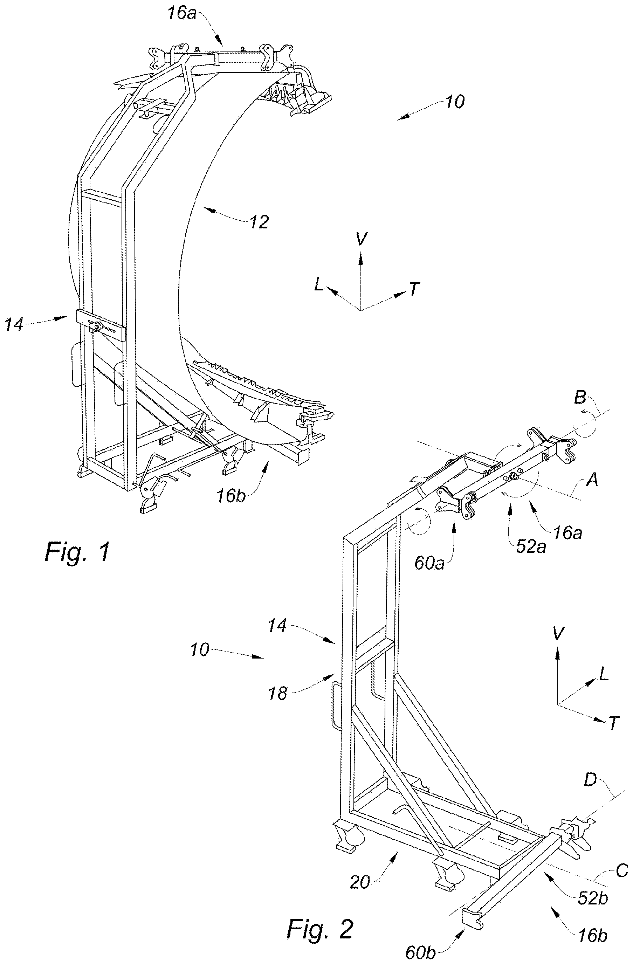

On a représenté à la figure 1 un outillage 10 pour la manutention d'une nacelle 12 de turboréacteur d'aéronef, seule une portion de la nacelle 12 est représentée à la figure 1.

En référence à la figure 2, l'outillage 10 comprend essentiellement un portique 14, une barre supérieure 16a de support et une barre inférieure 16b de support.

A titre indicatif, dans un souci de clarté, les références numériques concernant la barre supérieure 16a sont suivies de la lettre « a » et les références numériques concernant la barre inférieure 16b sont suivies de la lettre « b ».

Le portique 14 est une structure métallique du type mécano-soudé présentant une potence 18 qui est montée sur une embase 20 en appui sur le sol.

La potence 18 et l'embase 20 du portique 14 présentent globalement une forme en C qui est adaptée pour recevoir la nacelle 12 dans son creux.

Avantageusement, l'embase 20 est équipée de roues (non représentées) pour favoriser le déplacement de l'outillage 10 sur le sol, ainsi que des moyens d'arrêt (non représentés) du portique 14.

La barre supérieure 16a s'étend longitudinalement depuis une extrémité libre supérieure de la potence 18 et la barre inférieure 16b s'étend longitudinalement depuis une extrémité libre inférieure de l'embase 20 du portique 14, de sorte que la barre supérieure 16a et la barre inférieure 16b supportent une partie supérieure et une partie inférieure de la nacelle 12 respectivement.

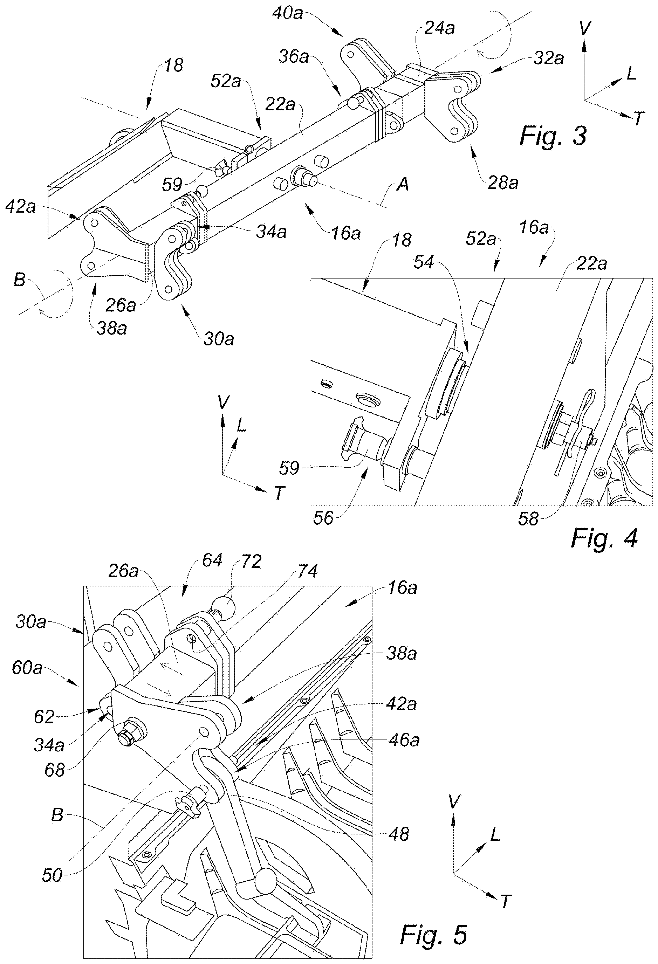

Comme on peut le voir à la figure 3, la barre supérieure 16a comporte un tronçon central 22a, un tronçon d'extrémité distal 24a et un tronçon d'extrémité proximal 26a.

La barre supérieure 16a comporte une première fixation, la première fixation comprenant une première chape 28a qui est agencée sur le tronçon d'extrémité distal 24a de la barre supérieure 16a et une seconde chape 30a qui est agencée sur le tronçon d'extrémité proximal 26a de la barre supérieure 16a.

Les chapes 28a, 30a de la première fixation sont alignées suivant un axe longitudinal de façon à coopérer avec des attaches supérieures d'un premier type de nacelle 12.

De plus, la barre supérieure 16a comporte une deuxième fixation, la deuxième fixation comprenant une première chape 32a qui est agencée sur le tronçon d'extrémité distal 24a de la barre supérieure 16a et une seconde chape 34a qui est agencée sur le tronçon d'extrémité proximal 26a de la barre supérieure 16a.

De même, les chapes 32a, 34a de la deuxième fixation sont alignées suivant un axe longitudinal de façon à coopérer avec des attaches supérieures d'un deuxième type de nacelle 12.

On notera que les chapes 32a, 34a de la deuxième fixation sont superposées aux chapes 28a, 30a de la première fixation.

Aussi, toujours selon la figure 3, la barre supérieure 16a comporte une troisième fixation 36a, 38a, la troisième fixation comprenant une première chape 36a qui est agencée sur le tronçon d'extrémité distal 24a de la barre supérieure 16a et une seconde chape 38a qui est agencée sur le tronçon d'extrémité proximal 26a de la barre supérieure 16a.

Les chapes 36a, 38a de la troisième fixation sont alignées suivant un axe longitudinal de façon à coopérer avec des attaches supérieures d'un troisième type de nacelle.

De plus, la barre supérieure 16a comporte une quatrième fixation, la quatrième fixation comprenant une première chape 40a qui est agencée sur le tronçon d'extrémité distal 24a de la barre supérieure 16a et une seconde chape 42a qui est agencée sur le tronçon d'extrémité proximal 26a de la barre supérieure 16a.

Les chapes 40a, 42a de la quatrième fixation sont alignées suivant un axe longitudinal de façon à coopérer avec des attaches supérieures d'un quatrième type de nacelle.

On a représenté en détail à la figure 5 la seconde chape 42a de la quatrième fixation, qui présente une forme en U et qui comprend deux oreilles 44a montées sur la barre supérieure 16a.

Les oreilles 44a s'étendent parallèlement entre elles et suivant une direction transversale, les oreilles 44a délimitant entre elles une fente 46a qui est adaptée pour recevoir une attache 48 d'un quatrième type de nacelle.

De façon complémentaire, la quatrième fixation comporte une goupille 50 de verrouillage qui traverse longitudinalement les deux oreilles 44a et l'attache 48 associée, pour verrouiller la nacelle sur la seconde chape 42a de la quatrième fixation.

Les chapes 28a, 30a, 32a, 34a, 36a, 38a, 40a des autres fixations sont semblables à la chape 42a précédemment décrite, elles comprennent chacune deux oreilles adaptées pour coopérer avec une attache complémentaire d'un type de nacelle associé, et ne seront donc pas décrites plus en détail par la suite pour ne pas alourdir inutilement la description.

De préférence, les attaches supérieures de chaque nacelle sont formées par des ferrures supérieures de la nacelle, et les attaches inférieures de chaque nacelle, qui coopèrent avec la barre inférieure 16b, sont formées par des verrous, ou étriers inférieurs, de la nacelle.

Selon un autre aspect, la barre supérieure 16a est articulée autour d'un premier axe A transversal de rotation supérieur, entre une première position de support, illustrée à la figure 1, dans laquelle la première fixation de la barre supérieure 16a est agencée pour être fixée sur l'attache d'un premier type de nacelle, et une seconde position de support dans laquelle la seconde fixation de la barre supérieure 16a est agencée pour être fixée sur l'attache d'un second type de nacelle.

Plus particulièrement, la barre supérieure 16a est adaptée pour effectuer un demi-tour autour du premier axe A transversal de rotation, entre sa première position et sa deuxième position de support.

A cet effet, l'outillage 10 comporte une première articulation supérieure 52a, illustrée à la figure 4, qui est formée par une liaison pivot 54a et un dispositif d'indexation 56a angulaire.

La liaison pivot 54a est réalisée au moyen d'une tige 58a qui s'étend transversalement suivant le premier axe A de rotation supérieur, depuis l'extrémité libre supérieure de la potence 18 du portique 14, et qui traverse le tronçon central 22a de la barre supérieure 16a.

Aussi, le dispositif d'indexation 56a comporte une tirette 59a d'indexation à ressort qui est montée coulissante transversalement sur une plaque support solidaire de la potence 18.

L'extrémité libre de la tirette 59a est adaptée pour coopérer avec un premier trou et un second trou (non représentés) qui sont délimités par la barre supérieure 16a pour bloquer le pivotement de la barre supérieure 16a dans sa première position de support et sa seconde position de support sélectivement.

De même, la barre supérieure 16a est articulée autour d'un second axe B longitudinal de rotation supérieur, entre une troisième position de support dans laquelle la troisième fixation de la barre supérieure 16a est agencée pour être fixée sur l'attache d'un troisième type de nacelle, et une quatrième position de support dans laquelle la quatrième fixation de la barre supérieure 16a est agencée pour être fixée sur l'attache d'un quatrième type de nacelle.

Plus particulièrement, le tronçon distal 24a et le tronçon proximal 26a de la barre supérieure 16a sont adaptés pour pivoter par incrément d'un demi-tour autour du second axe B longitudinal de rotation, par rapport au tronçon central 22a de la barre supérieure 16a.

A cet effet, l'outillage 10 comporte une seconde articulation supérieure 60a, illustrée en partie à la figure 5, qui est formée par une liaison pivot 62a et un dispositif d'indexation 64a angulaire.

La liaison pivot 62a est réalisée au moyen d'une première tige (non représentée) et d'une seconde tige 68a qui s'étendent longitudinalement suivant le second axe B de rotation supérieur, depuis une première extrémité et une seconde extrémité du tronçon central 22a de la barre supérieure 16a respectivement, la première tige et la seconde tige 68a formant axe de rotation du tronçon distal 24a et du tronçon proximal 26a de la barre supérieure 16a respectivement.

Aussi, le dispositif d'indexation 64a de la seconde articulation 60a comporte une première tirette d'indexation (non représentée) et une seconde tirette 72a d'indexation à ressort qui sont montées coulissantes longitudinalement sur la barre supérieure 16a respectivement.

Le tronçon distal 24a et le tronçon proximal 26a de la barre supérieure 16a délimitent chacun deux trous 74a (dont un seul est visible à la figure 5) qui sont décalés angulairement de 180 degrés et qui sont prévus pour coopérer avec la tirette associée pour bloquer le pivotement de la barre supérieure 16a dans sa troisième position de support et sa quatrième position de support sélectivement.

Plus particulièrement, le dispositif d'indexation 64a de la seconde articulation 60a permet de bloquer le pivotement du tronçon distal 24a et du tronçon proximal 26a de la barre supérieure 16a.

Toutefois, à titre non limitatif, la barre supérieure 16a peut être montée pivotante autour du second axe B de rotation dans sa totalité.

De même, selon une variante de réalisation non représentée, le tronçon distal 24a et le tronçon proximal 26a de la barre supérieure 16a peuvent être conçus chacun pour adopter plus de deux positions angulaires autour de l'axe B associé, par exemple quatre positions distinctes.

De même, la barre inférieure 16b de support est articulée autour d'un premier axe C de rotation inférieur transversal au moyen d'une première articulation inférieure 52b, la barre inférieure 16b étant articulée entre une première position de support, représentée à la figure 1, dans laquelle la barre inférieure 16b présente une première fixation qui est adaptée pour être fixée sur le premier type de nacelle, et une seconde position de support dans laquelle la barre inférieure 16b de support présente une seconde fixation qui est adaptée pour être fixée sur le second type de nacelle.

Aussi, la barre inférieure 16b de support est articulée autour d'un second axe D de rotation inférieur longitudinal au moyen d'une seconde articulation inférieure 60b, la barre inférieure 16b de support étant articulée entre une troisième position de support dans laquelle la barre inférieure 16b présente une troisième fixation qui est adaptée pour être fixée sur le troisième type de nacelle, et une quatrième position de support dans laquelle la barre inférieure 16b présente une quatrième fixation qui est adaptée pour être fixée sur le quatrième type de nacelle.

La barre inférieure 16b de l'outillage 10 est similaire à la barre supérieure 16a précédemment décrite, et ne sera donc pas décrite plus en détail pour ne pas alourdir la description.

Toutefois, à la différence de la barre supérieure 16a, la barre inférieure 16b est adaptée pour être fixée sur des verrous inférieurs de la nacelle associée, selon l'exemple décrit ici.

Ainsi, les fixations de la barre inférieure 16b sont adaptées pour coopérer avec les verrous inférieurs de la nacelle associée.

La présente description de l'invention est donnée à titre d'exemple non limitatif.

On comprendra que le nombre de positions angulaires de la barre supérieure 16a et de la barre inférieure 16b autour des différents axes de rotation ne sont pas limités à l'exemple décrit ci-dessus.

## Revendications

1. Outillage (10) pour la manutention d'une nacelle (12) de turboréacteur d'aéronef, l'outillage (10) comprenant un portique (14) qui comporte :
- une barre supérieure (16a) de support longitudinale adaptée pour être fixée sur des attaches (48) supérieures de la nacelle (12), et
- une barre inférieure (16b) de support longitudinale adaptée pour être fixée sur des attaches inférieures de la nacelle (12),
**caractérisé en ce que** la barre supérieure (16a) de support est articulée autour d'au moins un premier axe (A) de rotation supérieur au moyen d'une première articulation supérieure (52a), la barre supérieure (16a) étant articulée entre au moins une première position de support dans laquelle la barre supérieure (16a) présente une première fixation qui est adaptée pour être fixée sur un premier type de nacelle, et au moins une seconde position de support dans laquelle la barre supérieure (16a) de support présente une seconde fixation qui est adaptée pour être fixée sur un second type de nacelle.

2. Outillage (10) selon la revendication 1, **caractérisé en ce que** la barre supérieure (16a) de support est articulée autour d'un second axe (B) de rotation supérieur au moyen d'une seconde articulation supérieure (60a), la barre supérieure (16a) de support étant articulée entre au moins une troisième position de support dans laquelle la barre supérieure (16a) présente une troisième fixation qui est adaptée pour être fixée sur un troisième type de nacelle, et une quatrième position de support dans laquelle la barre supérieure (16a) présente une quatrième fixation qui est adaptée pour être fixée sur un quatrième type de nacelle, et **en ce que** le second axe (B) de rotation supérieur est perpendiculaire au premier axe (A) de rotation supérieur.

3. Outillage (10) selon l'une quelconque des revendications précédentes, **caractérisé en ce que** la première articulation supérieure (52a) comporte :
- une liaison pivot (54a) qui articule la barre supérieure (16a) par rapport au portique (14) autour du premier axe (A) de rotation supérieur, le premier axe (A) de rotation s'étendant transversalement et perpendiculairement à la longueur de la barre supérieure (16a), et
- un dispositif d'indexation (56a) angulaire qui est conçu pour bloquer le pivotement de la barre supérieure (16a) dans sa première position de support et sa seconde position de support sélectivement.

4. Outillage (10) selon la revendication 2, **caractérisé en ce que** la seconde articulation supérieure (60a) comporte :
- au moins une liaison pivot (62a) qui articule tout ou partie de la barre supérieure (16a) par rapport au portique (14) autour du second axe (B) de rotation supérieur, le second axe (B) de rotation s'étendant longitudinalement et suivant la longueur de la barre supérieure (16a), et
- un dispositif d'indexation (64a) angulaire qui est conçu pour bloquer le pivotement de la barre supérieure (16a) dans sa troisième position de support et sa quatrième position de support sélectivement.

5. Outillage (10) selon la revendication 4, **caractérisé en ce que** la barre supérieure (16a) comporte un tronçon central (22a), un tronçon d'extrémité distal (24a) et un tronçon d'extrémité proximal (26a), le tronçon d'extrémité distal (24a) et le tronçon d'extrémité proximal (26a) étant montés pivotant sur le tronçon central (22a) au moyen de la liaison pivot (62a) de la seconde articulation supérieure (60a).

6. Outillage (10) selon l'une quelconque des revendications précédentes, **caractérisé en ce que** la première fixation qui est adaptée pour être fixée sur un premier type de nacelle et la seconde fixation qui est adaptée pour être fixée sur un second type de nacelle présentent chacune la forme d'une chape en U qui est conçue pour coopérer avec une pièce complémentaire d'une desdites nacelles et une tige de verrouillage associée.

7. Outillage (10) selon l'une quelconque des revendications précédentes, **caractérisé en ce que** la barre inférieure (16b) de support est similaire à la barre supérieure (16a), la barre inférieure (16b) est articulée autour d'au moins un premier axe (C) de rotation inférieur au moyen d'une première articulation inférieure (52b), la barre inférieure (16b) étant articulée entre au moins une première position de support dans laquelle la barre inférieure (16b) présente une première fixation qui est adaptée pour être fixée sur le premier type de nacelle, et au moins une seconde position de support dans laquelle la barre inférieure (16b) de support présente une seconde fixation qui est adaptée pour être fixée sur le second type de nacelle.

8. Outillage (10) selon l'une quelconque des revendications précédentes, **caractérisé en ce que** la barre inférieure (16b) de support est articulée autour d'un second axe (D) de rotation inférieur au moyen d'une seconde articulation inférieure (60b), la barre inférieure (16b) de support étant articulée entre au moins une troisième position de support dans laquelle la barre inférieure (16b) présente une troisième fixation qui est adaptée pour être fixée sur le troisième type de nacelle, et une quatrième position de support dans laquelle la barre inférieure (16b) présente une quatrième fixation qui est adaptée pour être fixée sur le quatrième type de nacelle, et **en ce que** le second axe (D) de rotation inférieur est perpendiculaire au premier axe (C) de rotation inférieur.

9. Outillage (10) selon l'une quelconque des revendications précédentes, **caractérisé en ce que** le portique est équipé de moyens de roulement pour favoriser le déplacement du portique.

## Patentansprüche

1. Werkzeug (10) für die Handhabung einer Flugzeug-Triebwerksgondel (12), wobei das Werkzeug (10) ein Portal (14) umfasst, umfassend:
- eine obere Längstragstange (16a), die dafür geeignet ist, an oberen Halterungen (48) der Gondel (12) befestigt zu werden, und
- eine untere Längstragstange (16b), die dafür geeignet ist, an unteren Halterungen der Gondel (12) befestigt zu werden,
**dadurch gekennzeichnet, dass** die obere Tragstange (16a) mittels eines ersten oberen Gelenks (52a) um mindestens eine erste obere Drehachse (A) herum angelenkt ist, wobei die obere Stange (16a) zwischen mindestens einer ersten Tragstellung, in der die obere Stange (16a) eine erste Befestigung aufweist, die dafür geeignet ist, an einem ersten Gondeltyp befestigt zu werden, und mindestens einer zweiten Tragstellung angelenkt ist, in der die obere Tragstange (16a) eine zweite Befestigung aufweist, die dafür geeignet ist, an einem zweiten Gondeltyp befestigt zu werden.

2. Werkzeug (10) nach Anspruch 1, **dadurch gekennzeichnet, dass** die obere Tragstange (16a) mittels eines zweiten oberen Gelenks (60a) um eine zweite obere Drehachse (B) herum angelenkt ist, wobei die obere Tragstange (16a) zwischen mindestens einer dritten Tragstellung, in der die obere Stange (16a) eine dritte Befestigung aufweist, die dafür geeignet ist, an einem dritten Gondeltyp befestigt zu werden, und einer vierten Tragstellung angelenkt ist, in der die obere Stange (16a) eine vierte Befestigung aufweist, die dafür geeignet ist, an einem vierten Gondeltyp befestigt werden, und dadurch, dass die zweite obere Drehachse (B) zur ersten oberen Drehachse (A) senkrecht ist.

3. Werkzeug (10) nach einem der vorstehenden Ansprüche, **dadurch gekennzeichnet, dass** das erste obere Gelenk (52a) umfasst:
- eine Schwenkverbindung (54a), die die obere Stange (16a) in Bezug auf das Portal (14) um die erste obere Drehachse (A) herum anlenkt, wobei sich die erste Drehachse (A) quer und senkrecht zur Länge der oberen Stange (16a) erstreckt, und
- eine Winkelindexierungsvorrichtung (56a), die dafür konzipiert ist, das Schwenken der oberen Stange (16a) selektiv in ihrer ersten Tragstellung und ihrer zweiten Tragstellung zu sperren.

4. Werkzeug (10) nach Anspruch 2, **dadurch gekennzeichnet, dass** das zweite obere Gelenk (60a) umfasst:
- mindestens eine Schwenkverbindung (62a), die die ganze oder einen Teil der oberen Stange (16a) in Bezug auf das Portal (14) um die zweite obere Drehachse (B) herum anlenkt, wobei sich die zweite Drehachse (B) längs und entlang der Länge der oberen Stange (16a) erstreckt, und
- eine Winkelindexierungsvorrichtung (64a), die dafür konzipiert ist, das Schwenken der oberen Stange (16a) selektiv in ihrer dritten Tragposition und ihrer vierten Tragposition zu sperren.

5. Werkzeug (10) nach Anspruch 4, **dadurch gekennzeichnet, dass** die obere Stange (16a) einen mittleren Abschnitt (22a), einen distalen Endabschnitt (24a) und einen proximalen Endabschnitt (26a) umfasst, wobei der distale Endabschnitt (24a) und der proximale Endabschnitt (26a) mittels der Schwenkverbindung (62a) des zweiten oberen Gelenks (60a) schwenkbar am mittleren Abschnitt (22a) montiert sind.

6. Werkzeug (10) nach einem der vorstehenden Ansprüche, **dadurch gekennzeichnet, dass** die erste Befestigung, die dafür geeignet ist, an einem ersten Gondeltyp befestigt zu werden, und die zweite Befestigung, die dafür geeignet ist, an einem zweiten Gondeltyp befestigt zu werden, jede die Form eines U-förmigen Gabelkopfs aufweisen, der dafür konzipiert ist, mit einem komplementären Teil einer der Gondeln und einem zugehörigen Verriegelungsstift zusammenzuwirken.

7. Werkzeug (10) nach einem der vorstehenden Ansprüche, **dadurch gekennzeichnet, dass** die untere Tragstange (16b) der oberen Stange (16a) ähnlich ist, die untere Stange (16b) mittels eines ersten unteren Gelenks (52b) um mindestens eine erste untere Drehachse (C) herum angelenkt ist, wobei die untere Stange (16b) zwischen mindestens einer ersten Tragstellung, in der die untere Stange (16b) eine erste Befestigung aufweist, die dafür geeignet ist, am ersten Gondeltyp befestigt zu werden, und mindestens einer zweiten Tragstellung angelenkt ist, in der die untere Tragstange (16b) eine zweite Befestigung aufweist, die dafür geeignet ist, am zweiten Gondeltyp befestigt zu werden.

8. Werkzeug (10) nach einem der vorstehenden Ansprüche, **dadurch gekennzeichnet, dass** die untere Tragstange (16b) mittels eines zweiten unteren Gelenks (60b) um eine zweite untere Drehachse (D) herum angelenkt ist, wobei die untere Tragstange (16b) zwischen mindestens einer dritten Tragstellung, in der die untere Stange (16b) eine dritte Befestigung aufweist, die dafür geeignet ist, am dritten Gondeltyp befestigt zu werden, und einer vierten Tragstellung angelenkt ist, in der die untere Stange (16b) eine vierte Befestigung aufweist, die dafür geeignet ist, am vierten Gondeltyp befestigt zu werden, und dadurch, dass die zweite untere Drehachse (D) zur ersten unteren Drehachse (C) senkrecht ist.

9. Werkzeug (10) nach einem der vorstehenden Ansprüche, **dadurch gekennzeichnet, dass** das Portal mit Rollmitteln ausgestattet ist, um das Verschieben des Portals zu begünstigen.

## Claims

1. A tooling (10) for handling a nacelle (12) of an aircraft turbojet engine, the tooling (10) comprising a gantry (14) which includes:
- a longitudinal upper support bar (16a) adapted to be fastened on upper attachments (48) of the nacelle (12), and
- a longitudinal lower support bar (16b) adapted to be fastened on lower attachments of the nacelle (12),
**characterized in that** the upper support bar (16a) is hinged about at least a first upper axis of rotation (A) by means of a first upper hinge (52a), the upper bar (16a) being hinged between at least a first support position in which the upper bar (16a) has a first fixture which is adapted to be fastened on a first type of nacelle, and at least a second support position in which the upper support bar (16a) has a second fixture which is adapted to be fastened on a second type of nacelle.

2. The tooling (10) according to claim 1, **characterized in that** the upper support bar (16a) is hinged about a second upper axis of rotation (B) by means of a second upper hinge (60a), the upper support bar (16a) being hinged between at least a third support position in which the upper bar (16a) has a third fixture which is adapted to be fastened on a third type of nacelle, and a fourth support position in which the upper bar (16a) has a fourth fixture which is adapted to be fastened on a fourth type of nacelle, and **in that** the second upper axis of rotation (B) is perpendicular to the first upper axis of rotation (A).

3. The tooling (10) according to any one of the preceding claims, **characterized in that** the first upper hinge (52a) includes:
- a pivot connection (54a) which hinges the upper bar (16a) relative to the gantry (14) about the first upper axis of rotation (A), the first axis of rotation (A) extending transversely and perpendicularly to the length of the upper bar (16a), and
- an angular indexing device (56a) which is designed to selectively block the pivoting of the upper bar (16a) in its first support position and its second support position.

4. The tooling (10) according to claim 2, **characterized in that** the second upper hinge (60a) includes:
- at least one pivot connection (62a) which hinges all or part of the upper bar (16a) relative to the gantry (14) about the second upper axis of rotation (B), the second axis of rotation (B) extending longitudinally and along the length of the upper bar (16a), and
- an angular indexing device (64a) which is designed to selectively block the pivoting of the upper bar (16a) in its third support position and its fourth support position.

5. The tooling (10) according to claim 4, **characterized in that** the upper bar (16a) includes a central section (22a), a distal end section (24a) and a proximal end section (26a), the distal end section (24a) and the proximal end section (26a) being pivotally mounted on the central section (22a) by means of the pivot connection (62a) of the second upper hinge (60a).

6. The tooling (10) according to any one of the preceding claims, **characterized in that** each of the first fixture which is adapted to be fastened on a first type of nacelle and the second fixture which is adapted to be fastened on a second type of nacelle have the shape of a U-shaped yoke which is designed to cooperate with a complementary part of one of said nacelles and an associated locking rod.

7. The tooling (10) according to any one of the preceding claims, **characterized in that** the lower support bar (16b) is similar to the upper bar (16a), the lower bar (16b) is hinged about at least a first lower axis of rotation (C) by means of a first lower hinge (52b), the lower bar (16b) being hinged between at least a first support position in which the lower bar (16b) has a first fixture which is adapted to be fastened on the first type of nacelle, and at least a second support position in which the lower support bar (16b) has a second fixture which is adapted to be fastened on the second type of nacelle.

8. The tooling (10) according to any one of the preceding claims, **characterized in that** the lower support bar (16b) is hinged about a second lower axis of rotation (D) by means of a second lower hinge (60b), the lower support bar (16b) being hinged between at least a third support position in which the lower bar (16b) has a third fixture which is adapted to be fastened on the third type of nacelle, and a fourth support position in which the lower bar (16b) has a fourth fixture which is adapted to be fastened on the fourth type of nacelle, and **in that** the second lower axis of rotation (D) is perpendicular to the first lower axis of rotation (C).

9. The tooling (10) according to any one of the preceding claims, **characterized in that** the gantry is equipped with rolling means for facilitating the displacement of the gantry.
